Europäisches Patentamt

European Patent Office

Office européen des brevets

(11) Veröffentlichungsnummer: **0 463 567 A2**

# EUROPÄISCHE PATENTANMELDUNG

(21) Anmeldenummer: **91110152.5**

(51) Int. Cl.⁵: **B60K 15/077**

(22) Anmeldetag: **20.06.91**

(30) Priorität: **29.06.90 DE 4020830**

(43) Veröffentlichungstag der Anmeldung:
**02.01.92 Patentblatt 92/01**

(84) Benannte Vertragsstaaten:
**AT BE CH DE ES FR GB IT LI**

(71) Anmelder: **DEERE & COMPANY**
**1 John Deere Road**
**Moline, Illinois 61265(US)**

(72) Erfinder: **Benning, Friedrich, Dipl.-Ing.**
**Fliederweg 1**
**W-6830 Schwetzingen(DE)**
Erfinder: **Teich, Michael, Dipl.-Ing. FH**
**August-Bebel-Strasse 91**
**W-6800 Mannheim 24(DE)**

(74) Vertreter: **Feldmann, Bernhard et al**
**DEERE & COMPANY European Office Patent**
**Department Steubenstrasse 36-42**
**W-6800 Mannheim 1(DE)**

(54) **Entnahmeventil für Kraftstofftank.**

(57) Ein Entnahmeventil für den Kraftstofftank eines Fahrzeuges hat zwei Eintrittsöffnungen (12, 42, 82, 132), die über Leitungen mit Ansaugstellen im Bodenbereich des Kraftstofftanks in Verbindung stehen, sowie wenigstens eine mit einer Kraftstoffpumpe (46, 85) in Verbindung stehende Austrittsöffnung (16, 44, 84, 134). Innerhalb des Entnahmeventils sind Absperrmittel vorgesehen, durch die die normalerweise offenen Durchflußkanäle zwischen Eintrittsöffnungen (12, 42, 82, 132) und Austrittsöffnung (16, 44, 84, 134) unterbrechbar sind. Die Absperrmittel sind durch einen sich unter dem Einfluß von Schwere- oder Trägheitskräften bewegenden Körper, vorzugsweise einer Kugel (36, 78, 118), beeinflußbar. Ein einfacher und kostengünstig herstellbarer Aufbau ergibt sich dadurch, daß die Kugel (36, 78, 118) zwischen wenigstens zwei Anschlagflächen (22, 60, 116) eines Käfigs (20, 56, 114), der durch die Kugel (36, 78, 118) bewegbar ist, angeordnet ist. Dabei ist der Abstand zwischen den Anschlagflächen (22, 60, 116) größer als die entsprechende Ausdehnung der Kugel (36, 78, 118). Der Käfig (20, 56, 114) ist mit den Absperrmitteln derart verbunden, daß die Absperrmittel durch Bewegung des Käfigs (20, 56, 114) betätigbar sind.

FIG.1

Die Erfindung betrifft ein Entnahmeventil für einen Kraftstofftank eines Fahrzeuges mit wenigstens zwei Eintrittsöffnungen, die über Leitungen mit Ansaugstellen im Bodenbereich des Kraftstofftanks verbindbar sind, und mit wenigstens einer mit einer Kraftstoffpumpe verbindbaren Austrittsöffnung, wobei normalerweise offene Durchflußkanäle zwischen Eintrittsöffnungen und Austrittsöffnung durch Absperrmittel verschließbar sind und die Absperrmittel durch wenigstens einen sich unter dem Einfluß von Schwere- oder Trägheitskräften bewegenden Körper beeinflußbar sind.

Eine Reihe von Kraftfahrzeugen, wie Arbeitsmaschinen und insbesondere Ackerschlepper, erfordern große Kraftstofftanks, die eine relativ große Längen- und Seitenausdehnung in bezug auf die Höhenausdehnung aufweisen, um den Raumverhältnissen Rechnung zu tragen und eine große Bodenfreiheit des Fahrzeuges zu ermöglichen. Sind derart ausgedehnte Kraftstofftanks nur teilweise gefüllt, so sammelt sich bei Schrägstellung des Fahrzeuges, wie sie bei Bergfahrten oder bei Fahrten in der Ackerfurche auftreten können, der Kraftstoff auf der abgesenkten Tankseite. Sofern im Bereich dieser abgesenkten Tankseite die Ansaugstelle liegt, von der aus die Kraftstofförderpumpe den Kraftstoff entnimmt, entstehen keine Probleme. Liegt jedoch die Ansaugstelle in einem anderen Bereich, so kann sie sich bei Schrägstellung des Fahrzeuges selbst dann oberhalb der Kraftstoffoberfläche befinden, wenn der Tank noch eine große Kraftstoffmenge enthält.

Um auch für Schrägfahrten das gesamte Tankvolumen ausnutzen zu können und keine Luft anzusaugen ist es vorteilhaft, Kraftstoffansaugstellen an verschiedenen Stellen des Tankbodens anzubringen. Die Kraftstoffentnahme könnte dabei jedoch nur bedingt durch mehrere, jeweils mit den Ansaugstellen verbundene Kraftstofförderpumpen erfolgen, da die elektrisch angetriebenen Pumpen durch den geförderten Kraftstoff geschmiert werden und nicht leer gefahren werden dürfen.

Es ist daher zweckmäßig, ein Entnahmeventil einzusetzen, das zwischen den Ansaugstellen des Kraftstofftanks und der Förderpumpe eingebaut wird und welches die Verbindung zwischen einer luftansaugenden Ansaugstelle und der Förderpumpe absperrt.

Aus dem JP-Abstr. 61-240424 ist ein Entnahmeventil der eingangs genannten Art bekannt geworden, bei dem zwei an äußeren, unteren Ventilseiten liegende Eintrittsöffnungen durch je eine Stahlkugel verschließbar sein sollen. Neigt sich der Tank und mit ihm das Entnahmeventil zu einer Seite, so soll eine der beiden Kugeln nach außen rollen und die zugehörige Eintrittsöffnung verschließen. Dieses Entnahmeventil gewährleistet es jedoch nicht, daß jederzeit wenigstens eine Eintrittsöffnung vollständig offen ist und eine ungehinderte Kraftstoffentnahme ermöglicht. Vielmehr kann bei horizontal ausgerichtetem Entnahmeventil der Fall eintreten, daß gleichzeitig beide Kugeln ihre zugehörigen Entnahmeöffnungen wenigstens teilweise verschließen.

Durch die US-PS 2,332,007 ist ein Entnahmeventil für den Kraftstofftank eines Flugzeuges bekannt geworden, das eine Kraftstoffentnahme aus der jeweils tieferliegenden zweier Entnahmestellen erlauben soll. Das Entnahmeventil enthält zwei außenliegende, mit den Entnahmestellen verbundene Eintittsöffnungen und eine mittlere Austrittsöffnung, die mit einer Kraftstoffpumpe verbunden ist. In dem Ventilkörper befinden sich zwei kugelförmige Ventilteile, die sich unter dem Einfluß von Gravitationskräften auf zugehörige Ventilsitze zubewegen und diese verschließen. Die beiden Ventilkörper werden durch einen Stab auf Abstand gehalten, um ein gleichzeiges Verschließen beider Entnahmekanäle zu vermeiden. Dieses für die Flugtechnik bestimmte Ventil ist relativ aufwendig ausgebildet.

Die mit der Erfindung zu lösende Aufgabe wird darin gesehen, ein Entnahmeventil der eingangs genannten Art anzugeben, daß für Kraftfahrzeuge geeignet ist und einen einfachen, kostengünstig herstellbaren Aufbau aufweist.

Die Aufgabe wird erfindungsgemäß dadurch gelöst, daß der Körper zwischen wenigstens zwei Anschlagflächen eines Käfigs, der durch den Körper bewegbar ist, angeordnet ist, daß der Abstand zwischen den Anschlagflächen größer ist als die entsprechende Ausdehnung des Körpers und daß der Käfig mit den Absperrmitteln derart verbunden ist, daß die Absperrmittel durch Bewegung des Käfigs betätigbar sind. Dabei sollten zweckmäßigerweise die Absperrmittel so betätigt werden, daß immer wenigstens eine der Eintrittsöffnungen mit der Austrittsöffnung verbunden bleibt, so daß zu jeder Zeit Kraftstoff aus dem Kraftstofftank abgepumpt werden kann.

Vorzugsweise handelt es sich bei dem Körper um eine Kugel, die aufgrund von Schwere- und/oder Trägheitskräften zwischen den Anschlagflächen verrollbar ist. Ändert das Fahrzeug und mit ihm der Kraftstofftank und das Entnahmeventil seine horizotale Ausrichtung, so rollt die Kugel zu der tiefsten Stelle, stößt gegen eine Anschlagfläche und verleiht dem Käfig einen Impuls, wodurch sich dieser bewegt, z. B. verschiebt oder verschwenkt, und die Absperrmittel betätigt. Da der Zwischenraum zwischen den Anschlagflächen größer ist als der Durchmesser der Kugel, kann die Kugel sich zunächst in Bewegung setzen, bevor sie ihre Bewegungsenergie an die Anschlagfläche abgibt. Hierbei überträgt die Kugel auf die Anschlagfläche einen entsprechenden Impuls, der den Käfig verschiebt, was das Verschließen einer der Eintrittsöffnungen zur Folge hat.

An Stelle der Kugel kann natürlich auch ein anderer leicht rollender oder gleitender schwerer Körper verwendet werden. Die auf den Körper wirkenden Schwere- oder Trägheitskräfte sind proportional zu seiner Masse.

Das Entnahmeventil verhindert, daß bei Hangfahrten oder bei Durchführungen von Arbeiten auf nicht horizontalem Untergrund Luft in das Kraftstoffsystem angesaugt wird. Die Kugel verrollt mit geringer Reibung, so daß sie in der Praxis die Einnahme einer quasi indifferenten Position vermeidet und immer die Neigung hat, an einer Anschlagfläche anzuliegen und die entsprechende Eintrittsöffnung zu verschließen.

Einer bevorzugten Ausgestaltung der Erfindung zufolge ist das Ventilgehäuse im wesentlichen zylindrisch ausgebildet und enthält an seinen Enden je eine Eintrittsöffnung, die im Ventilinneren mit wenigstens einer im Mantelbereich des Ventilgehäuses abzweigenden Austrittsöffnung in Verbindung stehen. Im Ventilgehäuse befindet sich wenigstens ein Ventilkörper, der sich infolge einer Bewegung des Körpers, z. B. der Kugel, in axialer Richtung verschieben läßt. Erfolgt eine Verschiebung des Ventilkörpers bis in eine seiner Endlagen, so wird einer der beiden Durchflußkanäle zwischen den Eintrittsöffnungen und der Austrittsöffnung verschlossen. Der Ventilkörper kann dabei auf der Innenfläche des Gehäusemantels gleitbar gelagert sein. Zur Abdichtung der Eintrittsöffnung ist vorzugsweise ein Ventilsitz vorgesehen.

Als Dichtwerkstoff kommen Metallflächen, Kunststoff und Gummi in Betracht, wobei Gummi oder gummiartige Dichtungen besonders bevorzugt werden. Die Dichtfläche kann beispielsweise eben, kugelförmig, konisch oder selbstzentrierend ausgebildet sein. Die jeweilige Dichtfläche kann sich auf dem Ventilkörper oder im Bereich der Eintrittsöffnung befinden, während das Dichtmaterial an dem jeweils anderen Teil angebracht ist.

Der Ventilkörper trägt vorzugsweise an seinen beiden Enden Dichtungen, die mit Dichtflächen im Bereich der Eintrittsöffnungen zusammenwirken und als Absperrmittel dienen. Ferner trägt er an seinen beiden Enden je einen Führungsabschnitt, die in zylindrischen Abschnitten im Bereich der Enden des Ventilgehäuses gelagert sind und eine axiale Verschiebung des Ventilkörpers zulassen. In dem Führungsabschnitt sind Verbindungskanäle vorgesehen, die bei nicht geschlossener Eintrittsöffnung einen Kraftstoffdurchfluß von der Eintrittsöffnung zur Austrittsöffnung zulassen. Zur Ausbildung der Verbindungskanäle kann der Führungsabschnitt beispielsweise als gezahnter Zylinder ausgebildet sein. Ferner können die Kanäle auch innerhalb des Führungsabschnittes des Käfigs verlaufen.

Der Schließdruck hängt von der Schrägstellung bzw. der Hangabtriebskomponenten und dem Gewicht der Kugel ab. Dieser Druck wird gemäß einer zweckmäßigen Weiterbildung der Erfindung durch geeignete Mittel erhöht. Um einen hohen Schließdruck der Absperrmittel zu erreichen, wird ein unter Druck stehendes flüssiges oder gasförmiges Medium herangezogen, um entsprechend einer Vorsteuerung die Absperrmittel mit einem gewünschten Schließdruck zu beaufschlagen. Hierzu sind Ventilmittel vorgesehen, die vorzugsweise durch die Lage des Käfigs gesteuert werden. Als unter Druck stehendes Medium wird ein Teil des von der Kraftstoffpumpe geförderten Kraftstoffes abgezweigt.

Gemäß einer bevorzugten Ausgestaltung der Erfindung ist der mittlere Bereich des Ventilkörpers als Käfig ausgebildet und weist durch Verstrebungen miteinander verbundene Anschlagflächen auf, zwischen denen die Kugel frei auf der Gehäusemantelinnenfläche verrollbar angeordnet ist. Es handelt sich bei den Verstrebungen vorzugsweise um zwei Verbindungsstreben, die im oberen Bereich des Gehäuses verlaufen und sich auf nach innen weisenden Gehäusevorsprüngen abstützen. Durch ihre Lage behindern die Verbindungsstreben nicht die Beweglichkeit der Kugel. Die Vorsprünge im Ventilgehäuseinneren verhindern, daß sich der Käfig verdreht und stellen somit sicher, daß die Verbindungsstreben immer im oberen Bereich des Ventilgehäuses bleiben.

Einer weiteren bevorzugten Ausgestaltung der Erfindung zufolge ist der Käfig mit der Kugel außerhalb des Ventilgehäuses, das den Ventilkörper aufnimmt, angeordnet. Die Übertragung der Bewegungsinformation des Käfigs auf den Ventilkörper bzw. eine Vorsteuerventilanordnung kann über ein Gestänge erfolgen. Vorzugsweise ist der Käfig in einem außerhalb und quer zu der Bewegungsbahn des Körpers liegenden, mit dem Ventilgehäuse verbundenen Schwenklager gelagert. Ein mit dem Käfig starr verbundenes Auslöseelement greift in das Ventilgehäuse zur Beeinflussung der Absperrmittel ein. Durch die Wahl einer geeigneten Länge des Auslöseelementes lassen sich die Übertragungsverhältnisse einstellen.

Erfindungsgemäß wird ein Kraftstofftank mit einem derartigen Entnahmeventil beansprucht. Um zu gewährleisten, daß der Zufluß der höherliegenden Ansaugstelle immer gesperrt ist, sind die Ansaugstellen mit den Eintrittsöffnungen des Entnahmeventils überkreuz verbunden, d. h., daß die jeweils in eine Richtung (z. B. in Fahrtrichtung) weisende Eintrittsöffnung mit einer im Bereich der hierzu gegenüberliegenden Kraftstofftankseite angeordneten Ansaugstelle verbunden ist. Ein erfindungsgemäßes Entnahmeventil ist bevorzugt auf Bodenhöhe des Tanks eingebaut.

Wenn das Fahrzeug bzw. der Kraftstofftank horizontal ausgerichtet ist, nimmt die Kugel eine mittlere Lage in dem Ventilgehäuse ein. Neigt sich hingegen das Fahrzeug mit dem Tank und dem Entnahmeventil, so rollt die Kugel aufgrund ihrer Schwerkraft in die untere Lage und verleiht dem Käfig einen Impuls, durch den dieser sich auf die untere Eintrittsöffnung zubewegt und diese mit einer seiner Dichtungen verschließt. Diese untere Eintrittsöffnung steht über eine Leitung mit der infolge der Neigung angehobenen und möglicherweise nicht mehr von Kraftstoff bedeckten Ansaugstelle in Verbindung. Auf diese Weise wird immer die mit der höherliegenden Ansaugstelle in Verbindung stehende Eintrittsöffnung abgesperrt, wodurch das Entnahmeventil verhindert, daß bei Schrägfahrten oder bei Arbeiten auf schrägem Gelände über die Austrittsöffnung Luft von der Kraftstofförderpumpe angesaugt wird und ins Kraftstoffsystem gelangt.

Weitere vorteilhafte Ausgestaltungen und Weiterbildungen der Erfindung gehen aus den Unteransprüchen hervor.

Anhand der Zeichnung, die mehrere Ausführungsbeispiele der Erfindung zeigt, sollen die Erfindung sowie weitere Vorteile und vorteilhafte Weiterbildungen und Ausgestaltungen der Erfindung näher beschrieben und erläutert werden.

Es zeigt:

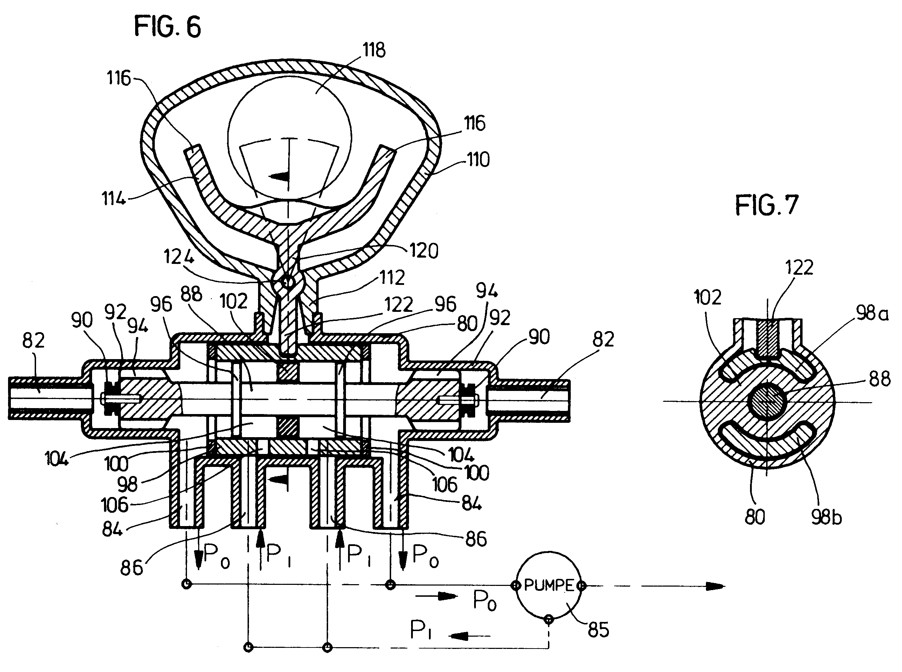

Fig. 1
den Längsschnitt und
Fig. 2
den Querschnitt durch ein Entnahmeventil gemäß eines ersten Ausführungsbeispieles der Erfindung,
Fig. 3
den Längsschnitt durch ein Entnahmeventil mit Schließdruckverstärkung gemäß eines zweiten Ausführungsbeispieles der Erfindung,
Fig. 4, 5 und 6
den Längsschnitt eines Entnahmevenventiles mit Schließdruckverstärkung gemäß eines dritten Ausführungsbeispieles der Erfindung in verschiedenen Ventilstellungen,
Fig. 7
den Querschnitt durch das Ventilgehäuse entlang der Linie 7 - 7 in Fig. 6 und
Fig. 8 und 9
den Längsschnitt eines Entnahmeventils gemäß eines vierten Ausführungsbeispieles der Erfindung in zwei Ventilstellungen.

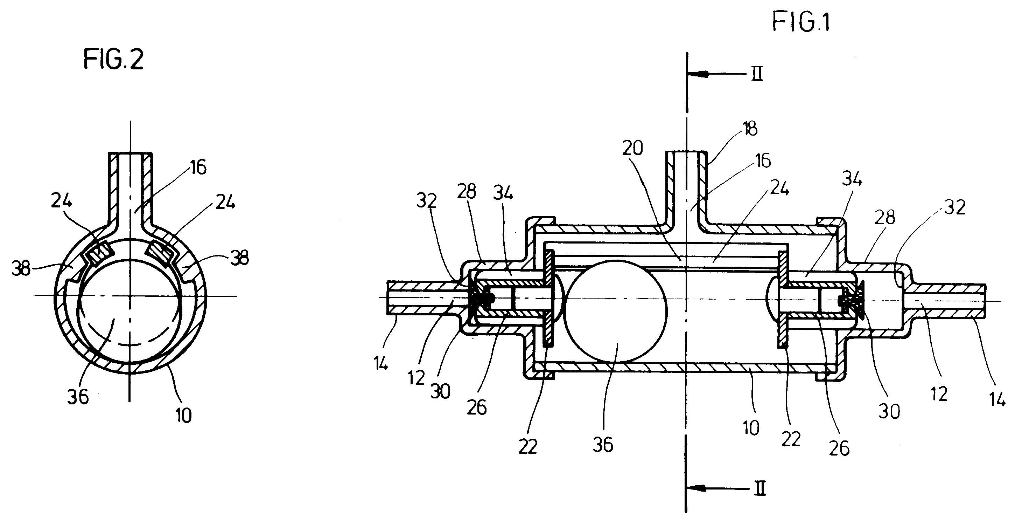

Das Entnahmeventil gemäß Fig. 1 besteht aus einem im wesentlichen zylindrischen Ventilgehäuse 10, an dessen Enden sich je eine Eintrittsöffnung 12 mit einem Schlauchanschluß 14 befindet. Im mittleren Bereich des Ventilgehäuses 10 zweigt eine Austrittsöffnung 16 mit einem weiteren Schlauchanschluß 18 ab, der mit einer nicht dargestellten Kraftstoffpumpe verbunden ist.

Die Eintrittsöffnungen 12 stehen über nicht dargestellte Leitungen mit jeweils einer Ansaugstelle im Bodenbereich eines nicht dargestellten Fahrzeugkraftstofftanks in Verbindung. Eine der Ansaugstellen kann sich dabei bezüglich der Fahrtrichtung im vorderen Bereich, die andere Ansaugstelle im hinteren Bereich des Kraftstofftankbodens befinden. In diesem Fall ist auch bei lediglich wenig gefülltem Kraftstofftank und bei Bergauffahrt zumindest die hintere Ansaugstelle und bei Talfahrt zumindest die vordere Ansaugstelle von Kraftstoff bedeckt. Sofern durch das Entnahmeventil die Kraftstoffpumpe immer mit derjenigen Ansaugstelle verbunden wird, die von Kraftstoff bedeckt ist, ist auch bei der Überwindung größerer Steigungen oder Gefälle eine Kraftstoffversorgung bei geringem Füllstand gewährleistet.

In dem Ventilgehäuse 10 ist ein Ventilkörper axial verschiebbar angeordnet. Der Ventilkörper besteht im wesentlichen aus einem Käfig 20 mit zwei Anschlagflächen 22, die durch zwei Verbindungsstreben 24 miteinander verbunden sind, und zwei nach außen weisenden, von den Anschlagflächen 22 getragenen Führungsabschnitten 26, die von zylindrischen Abschnitten 28 des Ventilgehäuses 10 aufgenommen werden und eine axiale Verschiebung des Ventilkörpers innerhalb des Gehäuses 10 zulassen.

An den Stirnseiten der Führungsabschnitte 26 sind Dichtungen 30 aus gummiartigem Material befestigt. Diesen liegen Dichtungsflächen 32 gegenüber, die sich im Gehäuseinneren im Bereich der Eintrittsöffnungen 12 befinden und einen Ventilsitz bilden. Wird der Ventilkörper innerhalb des Gehäuses 10 axial in eine Endlage verschoben, so wird eine der Dichtungen 30 gegen die entsprechende Dichtungsfläche 32 (Ventilsitz) gedrückt und verschließt die zugehörige Eintrittsöffnung 12.

Die Führungsabschnitte 26 weisen auf ihrem Umfang axial ausgerichtete Stege 34 auf, mit denen sie sich innerhalb der zylindrischen Abschnitte 28 am Ventilgehäuse 10 abstützen. Zwischen den Stegen 34 befinden sich axial ausgerichtete Zwischenräume, die als Verbindungskanäle dienen. Damit stellen die Führungsabschnitte 26 außen gezahnte Zylinder dar, die bei geöffnetem Ventilsitz den Kraftstoffdurchfluß von der Eintrittsöffnung 12 zur Austrittsöffnung 16 ermöglichen und eine geringe Gleitreibung des Ventilkörpers im Ventilgehäuse 10 gewährleisten.

Der Ventilkörper läßt sich durch die Bewegungsenergie einer Kugel 36 in axialer Richtung verschieben. Die Kugel 36 befindet sich in dem Ventilgehäuse 10 zwischen den Anschlagflächen 22 des Käfigs 20. Der Zwischenraum zwischen den Anschlagflächen 22 ist im vorliegenden Ausführungsbeispiel etwa doppelt so groß wie der Durchmesser der Kugel 36, so daß diese zwischen den Anschlagflächen 22 einen freien Bewegungsspielraum hat.

Das Ventilgehäuse 10 steht mit dem Fahrzeuggestell im wesentlichen in starrer Verbindung und ist mit dem Fahrzeug horizontal ausgerichtet. Die Ventilgehäuseachse liegt parallel zu einer gedachten Verbindungslinie zwischen den beiden Ansaugstellen im Bodenbereich des Kraftstofftanks. Neigt sich das Fahrzeug, beispielsweise aufgrund einer Gefällefahrt, so neigt sich auch das Ventilgehäuse 10 in dieselbe Richtung. Die Kugel 36 rollt aufgrund ihrer Schwerkraft frei zu einem Ende des Ventilgehäuses und verschiebt dabei den Käfig mit dem Ventilkörper, wodurch der tieferliegende Ventilsitz verschlossen wird, während der andere Ventilsitz offen bleibt. Die nun offene, oben liegende Eintrittsöffnung des Entnahmeventils ist mit der tieferliegenden, von Kraftstoff umspülten Ansaugstelle verbunden, so daß durch diese Eintrittsöffnung weiterhin nur Kraftstoff angesaugt wird. Da die andere Eintrittsöffnung verschlossen ist, wird durch diese kein Kraftstoff angesaugt. Auch im Falle, daß die höherliegende Ansaugstelle oberhalb der Kraftstoffoberfläche liegt und nicht von Kraftstoff umspült ist, wird daher keine Luft angesaugt, was zur Leistungsverminderung oder zum Stillstand des Motors führen würde.

Bei Fahrzeugen, die häufig in quer zur Fahrtrichtung geneigter Lage eingesetzt werden, wie es beispielsweise bei Furchenfahrt eines Ackerschleppers der Fall ist, können die Ansaugstellen und damit auch das Entnahmeventil in Querrichtung des Fahrzeuges angeordnet sein. Es ist aber auch eine diagonale Anordnung denkbar, um eine optimale Kraftstoffentnahme sowohl bei Längsneigungen als auch bei Querneigungen des Fahrzeuges zu erreichen.

Entsprechend dem Kraftstoff im Kraftstofftank ist die Kugel 36 auch dem Einfluß von Trägheitskräften, z. B. beim Bremsen des Fahrzeuges oder bei Kurvenfahrt, ausgesetzt. Sie bewegt sich entsprechend innerhalb des Ventilgehäuses 10 und verschließt gegebenenfalls einen Ventilsitz.

Die Ausbildung eines Bewegungsspielraumes für die Kugel 36 zwischen den Anschlagflächen 22 ermöglicht es, daß die Kugel 36 frei rollen kann, bevor sie gegen eine Anschlagfläche 22 stößt und den Ventilkörper verschiebt. Die Kugel nimmt dabei Bewegungsenergie auf, bevor sie gegen die Anschlagfläche 22 des Käfigs 20 stößt und auf diesen mit einem entsprechenden Impuls ihre Bewegungsenergie überträgt. Hierdurch wird der Ventilkörper verschoben und die entsprechende Eintrittsöffnung 12 verschlossen.

Wie aus Fig. 2 hervorgeht, ist die Austrittsöffnung 16 nach oben gerichtet und die Kugel 36 rollt auf der Innenwandung des Ventilgehäuses 10 entlang. Der Käfig 20 liegt mit seinen beiden Verbindungsstreben 24 auf zwei axial verlaufenden, nach innen gerichteten Gehäusevorsprüngen 38 des Ventilgehäuses 10 auf. Die Auflageflächen zwischen den Gehäusevorsprüngen 38 und den Verbindungsstreben 24 sind als Gleitbahn ausgebildet.

Das Ventilgehäuse 10 und der Ventilkörper können aus solchem Kunststoff hergestellt sein, der eine gute Gleitpaarung der Teile darstellt, während die Kugel 36 vorzugsweise aus einem Material hohen spezifischen Gewichtes, beispielsweise aus Stahl oder Messing, besteht, um den erforderlichen Impuls aufzubringen.

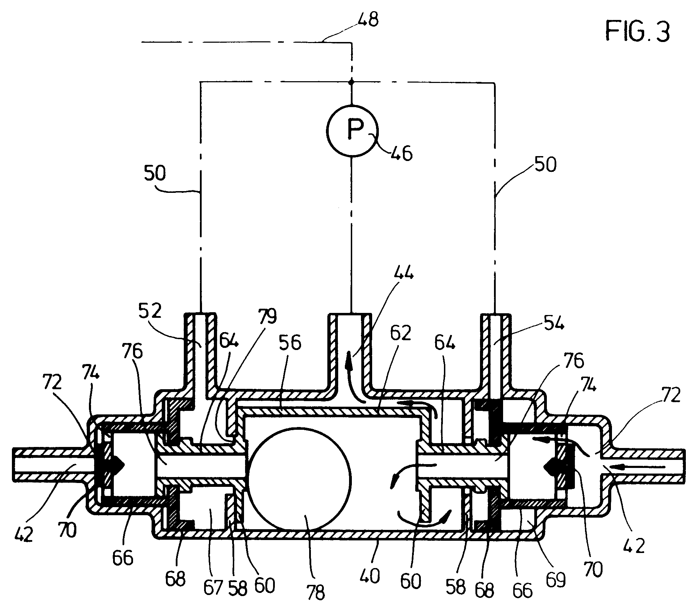

Aus Fig. 3 geht ein weiteres Ausführungsbeispiel der Erfindung hervor. Es handelt sich um ein Entnahmeventil mit einer Schließdruckverstärkung. Auch dieses Ventil weist ein im wesentlichen zylindrisches Ventilgehäuse 40 mit je einer Eintrittsöffnung 42 an den beiden Enden auf. Im mittleren Bereich des Ventilgehäuses 40 geht nach oben eine Austrittsöffnung 44 ab, die mit einer Kraftstofförderpumpe 46 in Verbindung steht. Die Kraftstofförderpumpe 46 fördert den Kraftstoff über die Leitung 48 zur nicht dargestellten Einspritzpumpe des Fahrzeugantriebes. Von der Leitung 48 zweigen zwei Leitungen 50 ab, die mit radial ausgerichteten, ebenfalls nach oben weisenden Eintrittskanälen 52, 54 des Ventilgehäuses 40 in Verbindung stehen und unter Druck stehenden Kraftstoff in das Innere des Ventilgehäuses 40 leiten. Die Stutzen für die Eintrittsöffnungen 42, die Austrittsöffnung 44 und die Eintrittskanäle 52, 54 können als Schlauchanschlüsse ausgebildet sein.

In dem Ventilgehäuse 40 ist ein Ventilkörper axial verschiebbar angeordnet. Der mittlere Bereich des Ventilkörpers ist als Käfig 56 ausgebildet, der zwischen zwei mit dem Ventilgehäuse 40 verbundenen Trennwänden 58 verschiebbar ist. Der Käfig 56 besteht auch hier aus zwei Anschlagflächen 60, die über Verbindungsstreben 62 miteinander verbunden sind. An den Anschlagflächen 60 sind nach außen weisende, sich durch jeweils eine der Trennwände 58 erstreckende, im wesentlichen zylindrische Ansätze 64 angeformt, die jeweils mit einem im Ventilgehäuse 40 gelagerten Kolbenteil 66 in Verbindung stehen. Jedes Kolbenteil 66 hat eine zylindrische Kolbenfläche 68, durch die der zugehörige Eintrittskanal 52, 54 verschließbar ist, indem der Ventilkörper axial verschoben wird. Das Kolbenteil 66 trägt auf seiner axial nach außen weisenden Stirnseite eine Dichtung 70 aus gummiartigem Material, der eine Dichtfläche 72 (Ventilsitz) im Ventilgehäuse 40 gegenüberliegt und durch die die Eintrittsöffnung 42 verschließbar ist.

In der Kolbenstirnseite und dem zylindrischen Ansatz 64 befinden sich Durchtrittskanäle 74, 76.

Bei offenem Ventil, sofern also die Dichtung 70 nicht auf der Dichtfläche 72 aufliegt, kann Kraftstoff durch die Eintrittsöffnung 42, die Durchtrittskanäle 74, 76, vorbei an der Trennwand 58 zu der Austrittsöffnung 44 und der Kraftstofförderpumpe 46 fließen. Dieser Durchflußverlauf ist auf der rechten Seite der Fig. 3 durch Pfeile angedeutet. Wenn die Dichtung 70 an der Dichtfläche 72 anliegt, wird ein Kraftstoffdurchtritt sowie das Ansaugen von Luft unterbunden.

Zwischen den Anschlagflächen 60 des Käfigs 56 befindet sich eine Kugel 78, die auf der Ventilgehäuseinnenwandung rollt und zwischen den Anschlagflächen 60 einen Bewegungsspielraum hat. Weitere Einzelheiten des in Fig. 3 dargestellten Entnahmeventils und dessen Anschluß an die Ansaugstellen entsprechen denen des in Fig. 1 und 2 dargestellten Entnahmeventils und werden hier, um Wiederholungen zu vermeiden, nicht erneut beschrieben.

Die Funktionsweise des in Fig. 3 dargestellten Entnahmeventils ist wie folgt:
Beschleunigt oder verzögert das Fahrzeug, oder nimmt das Fahrzeug und mit ihm der Kraftstofftank und das Entnahmeventil eine von der Horizontalen abweichende Lage ein, so verschiebt die Kugel 78 infolge Schwere- oder Trägheitskräften den Ventilkörper in eine Richtung (gemäß Fig. 3 nach links). Mit dem Ventilkörper wird das entsprechende (linke) Kolbenteil 66 nach außen verschoben und öffnet den Eintrittskanal 52, so daß Kraftstoff von der Kraftstofförderpumpe 46 in die linke Kolbenkammer 67 zwischen Trennwand 58 und Kolbenteil 66 eintreten kann. Hierdurch wird das Kolbenteil 66 weiter nach außen (links) verschoben, so daß sich die Dichtung 70 auf die Dichtfläche 72 preßt und die Eintrittsöffnung 42 schließt. Gleichzeitig zieht der Ventilkörper das andere (rechte) Kolbenteil 66 ins Ventilgehäuseinnere. Dadurch verschließt dessen Kolbenfläche 68 den Eintrittskanal 54, so daß kein unter Druck stehender Kraftstoff in die rechte Kolbenkammer 69 des Ventilgehäuses eindringen und den rechten Kolben beaufschlagen kann. In dieser Stellung ist die zugehörige (rechte) Eintrittsöffnung 42 geöffnet, so daß Kraftstoff durch die Durchtrittskanäle 74, 76 zur Austrittsöffnung 44 fließen kann. Rollt die Kugel 78 zur anderen (rechten) Seite, so stößt sie den Käfig 56 in diese Richtung, so daß die Kolbenfläche 68 den Eintrittskanal 52 verschließt und den Eintrittskanal 54 öffnet. Dabei wird die Bewegung des Ventilteils vom Kraftstoffdruck unterstützt und die andere (linke) Eintrittsöffnung 42 geöffnet.

Der wirksame Kolbenquerschnitt, die Durchtrittsfläche 79 und das Gewicht der Kugel 78 müssen so aufeinander abgestimmt sein, daß die erforderliche Funktionweise des Entnahmeventiles gewährleistet ist.

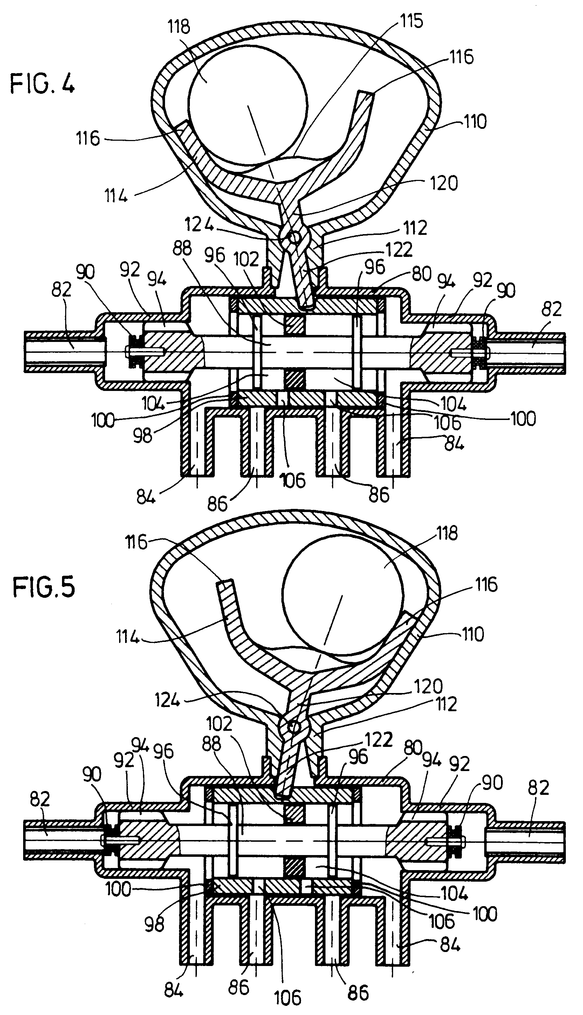

Aus den Figuren 4, 5, 6 und 7 geht ein weiteres Ausführungsbeispiel der Erfindung hervor. Sie zeigen ein Entnahmeventil mit Schließdruckverstärkung. Dieses Ventil weist ein zylindrisches Ventilgehäuse 80 auf, an dessen Stirnseiten sich je eine mit einer Ansaugstelle im Treibstofftank verbindbare Eintrittsöffnung 82 befindet. Jeweils im Endbereich der Mantelfläche des Ventilgehäuses 80 zweigt eine Austrittsöffnung 84 ab, die an die Ansaugseite ($P_0$) der Kraftstoffpumpe 85 anschließbar ist. Im mittleren Bereich der Mantelfläche des Ventilgehäuses 80 münden zwei Eintrittskanäle 86. Diese sind mit der Druckseite ($P_1$) der Kraftstoffpumpe 85 verbindbar.

Innerhalb des Ventilgehäuses 80 ist ein axial verschiebbarer Ventilkörper 88 angeordnet, der an seinen Enden je eine Dichtung 90 zum Verschließen der Eintrittsöffnungen 82 trägt. Die beiden Endbereiche des Ventilkörpers 88 sind in zylindrischen Abschnitten 92 des Ventilgehäuses 80 geführt. Jeder Endbereich enthält an seinem Umfang Schlitze 94, die einen Durchfluß des Kraftstoffes von den Eintrittsöffnungen 82 zur Austrittsöffnung 84 erlauben. Im mittleren Bereich trägt der Ventilkörper zwei zueinander beabstandete Kolben 96.

Innerhalb des Ventilgehäuses 80 ist ein axial verschiebbarer Schieber 98 angeordnet, der aus zwei zylinderförmigen Segmenten 98a und 98b (Fig.7) und zwei an den Stirnseiten mit den beiden Segmenten 98a, 98b verbundenen Ringen 100 besteht. Die Außenflächen des Schiebers 98 schmiegen sich an die Innenfläche des Gehäusezylinders an. Innerhalb des Schiebers 98 sind die beiden Kolben 96 mit dem Ventilkörper 88 verschiebbar angeordnet und verschließen den mittleren Bereich des Schiebers 98 in axialer Richtung.

Zwischen den beiden Kolben 96 liegt eine mit dem Ventilgehäuse 80 verbundene Trennwand 102, durch die innerhalb des Schiebers 98 zwei Kolbenkammern 104 ausgebildet werden. Jede der Kolbenkammern 104 ist durch eine radiale Bohrung 106 in der Außenfläche des Schiebers 98 mit dem Inneren des Ventilgehäuses 80 verbunden. Durch axiale Verschiebung des Schiebers 98 läßt sich jeweils ein Durchtrittskanal zwischen einer Kolbenkammer 104 und einem der beiden Eintrittskanäle 96 öffnen.

Parallel zum Ventilgehäuse 80 ist ein weiteres Gehäuse 110 angeordnet, das über ein halsförmiges Gehäuseteil 112 mit dem Ventilgehäuse 80 verbunden ist. In dem Gehäuse 110 befindet sich ein Käfig 114 mit zwei sich in etwa gegenüberliegenden Anschlagflächen 116, zwischen denen eine im Gehäuse 110 gelagerte Kugel 118 frei und parallel zur Ventilgehäuseachse hin- und herrollen kann. Die Rollbahn 115 der Kugel ist etwas nach oben gewölbt, so daß die Kugel keine instabile Lage einnimmt, sondern sich auf der linken oder rechten Seite des Käfigs 114 befindet. Es ist eine Neigung gegenüber der Horizontalen von ca. 5° erforderlich, damit die Kugel aus ihrer einen Lage in die andere Lage überwechselt (winkelgesteuerte Betätigung). Der Käfig 114 ist mit einem in das Ventilgehäuse 80 ragenden Hebel 120 verbunden, welcher im Bereich des halsförmigen Gehäuseteils 112 verschwenkbar gelagert ist, so daß sich der Ventilkörper 88 in etwa in der Bewegungsbahn der Kugel 118 verschwenken läßt.

Das dem Käfig 114 abgewandte freie Hebelende 122 greift in eine Ausnehmung im Schieber 98 ein. Hierdurch läßt sich eine Schwenkbewegung des Käfigs 114 auf den Schieber 98 derart übertragen, daß ein Verschwenken des Käfigs 114 nach rechts eine axiale Verschiebung des Schiebers 98 nach links nach sich zieht (oder umgekehrt). Durch die Bemessung der Hebelabschnitte, die beidseits des Schwenklagers 124 ausgebildet sind, lassen sich eine Wegtransformation und eine Kraftübertragung einstellen und an die Anforderungen des Anwendungsfalles anpassen. Im dargestellten Ausführungsbeispiel ist der in das Ventilgehäuse 80 eingreifende Hebelabschnitt kürzer als der Abstand zwischen Schwenklager 124 und der Kugelmitte. Dadurch ruft eine bestimmte Verschiebung des Käfigs 114 eine kleinere Verschiebung des Schiebers 98 hervor. Die durch die Kugel 118 auf den Käfig 114 ausgeübte Kraft wird jedoch durch die Hebelübertragung auf den Schieber 98 verstärkt.

Das Entnahmeventil gemäß der Figuren 4, 5 und 6 kann grundsätzlich in einer beliebigen Richtung im Fahrzeug ausgerichtet sein. Es ist lediglich darauf zu achten, daß die Rollfläche der Kugel bei waagerecht ausgerichtetem Kraftstofftank ebenfalls in etwa waagerecht liegt. Die Eintrittsöffnungen 82 werden hier nicht, wie bei den Entnahmeventilen gemäß der Figuren 1 bis 3, überkreuz mit den Ansaugstellen im Bodenbereich des Kraftstofftanks, sondern gleichsinnig angeschlossen, d. h., die vordere Eintrittsöffnung 82 wird mit der vorderen Ansaugstelle und die hintere Eintrittsöffnung 82 wird mit der hinteren Ansaugstelle verbunden.

Die Wirkungsweise des Entnahmeventils gemäß der Figuren 4, 5, 6 und 7 ist folgende: Neigt sich das Entnahmeventil aus seiner waagerechten Ausrichtung, so daß eine Eintrittsöffnung 82 höher liegt als die andere, so rollt die Kugel 118 im Gehäuse 110 zu der tieferliegenden Seite und stößt gegen die entsprechende Anschlagfläche 116. Dabei wird der Käfig 114 und mit ihm der Hebel 120 und das Hebelende 122 um das Schwenklager 124 verschwenkt. Das Hebelende 122 drückt den Schieber 98 aus einer mittleren Lage, wie sie in Fig. 6 dargestellt ist, in eine seitliche Lage, wie sie aus Fig. 4 oder 5 hervorgeht. Durch die Verschiebung des Schiebers 98 wird eine radiale Bohrung 106 des Schiebers mit einem der Eintrittskanäle 86 wenigstens teilweise zur Deckung gebracht, so daß die entsprechende Kolbenkammer 104 mit der Kraftstoffpumpe 85 verbunden wird und unter deren Druck $P_1$ gesetzt wird. Infolge dieses Druckes $P_1$ verschiebt sich der Ventilkörper 88 zu einer Endlage, wodurch die Dichtung 90 die Eintrittsöffnung 82 verschließt.

Die andere Kolbenkammer 104 steht nicht unter dem Druck $P_1$ der Kraftstoffpumpe, da die zugehörige radiale Bohrung nicht mit dem Eintrittskanal fluchtet und der Druck in der Kolbenkammer über Undichtigkeiten des zugehörigen Kolbens und die Austrittsöffnung 84 abgebaut wird.

Rollt die Kugel 118 zur anderen Seite, so wird der Schieber 98 durch den Käfig 114 zur anderen Seite verschoben, so daß der andere Kolbenraum unter Druck gesetzt wird und der Ventilkörper 88 die andere Eintrittsöffnung 82 verschließt.

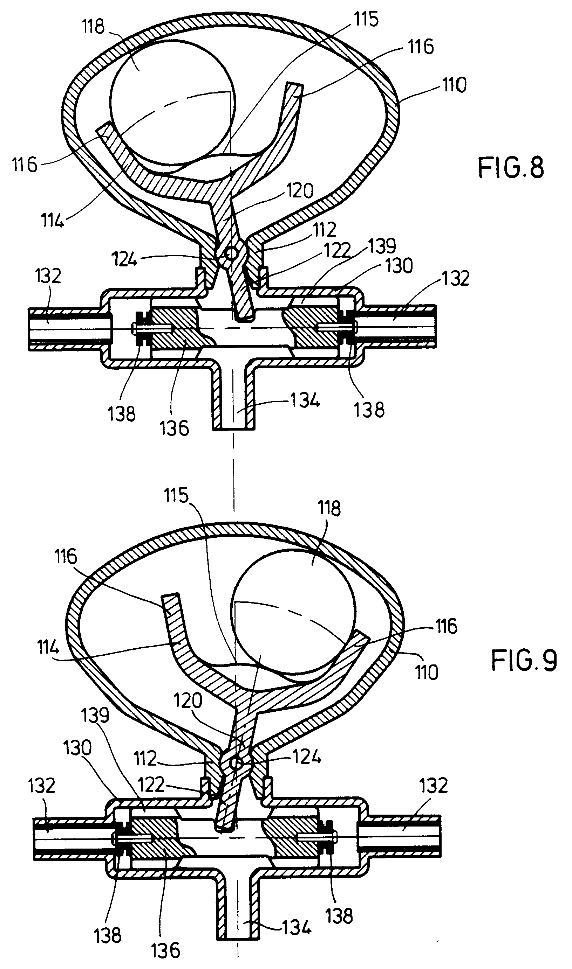

Die Figuren 8 und 9 zeigen zwei Stellungen eines weiteren Entnahmeventils. Dieses Ventil weist ein zylindrisches Ventilgehäuse 130 auf, an dessen Stirnseiten sich je eine mit einer Ansaugstelle im Treibstofftank verbindbare Eintrittsöffnung 132 befindet. Im mittleren Bereich der Mantelfläche des Ventilgehäuses 130 mündet eine mit der Kraftstoffpumpe verbindbare Austrittsöffnung 134. In dem Ventilgehäuse ist ein axial verschiebbarer Ventilkörper 136 angeordnet, an dessen Enden je eine Dichtung 138 befestigt ist, durch die sich die zugehörige Eintrittsöffnung 132 verschließen läßt. Sofern die Eintrittsöffnung 132 nicht von der Dichtung 138 verschlossen ist, kann Kraftstoff durch die Eintrittsöffnung 132, die Schlitze 139 im Ventilkörper 136 und die Austrittsöffnung 134 von der Kraftstoffpumpe angesaugt werden.

Der Ventilkörper 136 läßt sich durch einen Hebel 120 axial verschieben. Wie bereits anhand der Figuren 4 bis 6 beschrieben wurde, wird der Hebel durch eine in einem Käfig 114 gelagerte Kugel 118 angetrieben. Das Entnahmeventil gemäß der Figuren 8 und 9 arbeitet nicht mit einer flüssigkeitsgesteuerten Schließdruckverstärkung.

Auch wenn die Erfindung lediglich an Hand einiger Ausführungsbeispiele beschrieben wurde, erschließen sich für den Fachmann im Lichte der vorstehenden Beschreibung viele verschiedenartige Alternativen, Modifikationen und Varianten, die unter die vorliegende Erfindung fallen.

**Patentansprüche**

1. Entnahmeventil für einen Kraftstofftank eines Fahrzeuges mit wenigstens zwei Eintrittsöffnungen, die über Leitungen mit Ansaugstellen im Bodenbereich des Kraftstofftanks verbindbar sind, und mit wenigstens einer mit einer Kraftstoffpumpe verbindbaren Austrittsöffnung, wobei normalerweise offene Durchflußkanäle zwischen Eintrittsöffnungen und Austrittsöffnung durch Absperrmittel verschließbar sind und die Absperrmittel durch wenigstens einen sich unter dem Einfluß von Schwere- oder Trägheitskräften bewegenden Körper beeinflußbar sind, dadurch gekennzeichnet, daß der Körper (36, 78, 118) zwischen wenigstens zwei Anschlagflächen (22, 60, 116) eines Käfigs (20, 56, 114), der durch den Körper (36, 78, 118) bewegbar ist, angeordnet ist, daß der Abstand zwischen den Anschlagflächen (22, 60, 116) größer ist als die entsprechende Ausdehnung des Körpers (36, 78, 118) und daß der Käfig (20, 56, 114) mit den Absperrmitteln derart verbunden ist, daß die Absperrmittel durch Bewegung des Käfigs (20, 56, 114) betätigbar sind.

2. Entnahmeventil nach Anspruch 1, dadurch gekennzeichnet, daß der Körper eine Kugel (36, 78, 118) ist, die aufgrund von Schwere- und Trägheitskräften gegen die Anschlagflächen (22, 60, 116) des Käfigs (20, 56, 114) derart verrollbar ist, daß sich der Käfig (20, 56, 114) bewegt.

3. Entnahmeventil nach Anspruch 1 oder 2, dadurch gekennzeichnet, daß an den Enden eines im wesentlichen zylindrischen Ventilgehäuses (10, 40, 80, 130) je eine Eintrittsöffnung (12, 42, 82, 132) vorgesehen ist, die mit wenigstens einer im Mantelbereich des Ventilgehäuses (10, 40, 80, 130) abzweigenden Austrittsöffnung (16, 44, 84, 134) in Verbindung stehen, und daß im Ventilgehäuse (10, 40, 80, 130) wenigstens ein sich infolge der Bewegung des Körpers (36, 78, 118) in axialer Richtung verschiebbarer Ventilkörper (88, 136) angeordnet ist, bei dessen Verschiebung in eine seiner Endlagen einer der beiden Durchflußkanäle zwischen den Eintrittsöffnungen (12, 42, 82, 132) und der Austrittsöffnung (16, 44, 84, 134) verschlossen wird.

4. Entnahmeventil nach einem der Ansprüche 1 bis 3, dadurch gekennzeichnet, daß als Absperrmittel am Ventilkörper (88, 136) Dichtungsmittel (30, 70, 90, 138) befestigt sind, durch die die jeweils zugehörige Eintrittsöffnung (12, 42, 82, 132) verschließbar ist.

5. Entnahmeventil nach Anspruch 3 oder 4, dadurch gekennzeichnet, daß der Ventilkörper (88, 136) an seinen beiden Enden je einen Führungsabschnitt (26) aufweist, die in zylindrischen Abschnitten (28, 92) des Ventilgehäuses (10, 40, 80, 130) gelagert sind und eine axiale Verschiebung des Ventilkörpers (88, 136) zulassen.

6. Entnahmeventil nach Anspruch 5, dadurch gekennzeichnet, daß an der Stirnseite jedes Führungsabschnittes (26) ein die zugehörige Eintrittsöffnung (12, 42, 82, 132) verschließbares Dichtungsteil (30, 70, 90, 138) befestigt ist und daß in dem Führungsabschnitt (26) wenigstens ein Verbindungskanal (34, 74, 76, 94) vorgesehen ist, der bei nicht geschlossener Eintrittsöffnung (12, 42, 82, 132) einen Kraftstoffdurchfluß von der Eintrittsöffnung (12, 42, 82, 132) zur Austrittsöffnung (16, 44, 84, 134) zuläßt.

7. Entnahmeventil nach einem der Ansprüche 1 bis 6, dadurch gekennzeichnet, daß in Abhängigkeit von der Lage des Käfigs (56, 114) steuerbare Ventilmittel vorgesehen sind, durch die ein unter Druck stehendes flüssiges oder gasförmiges Medium steuerbar ist, um die Absperrmittel mit einem gewünschten Schließdruck zu beaufschlagen.

8. Entnahmeventil nach Anspruch 7, dadurch gekennzeichnet, daß zur Bereitstellung des Schließdruckes der Kraftstoffdruck herangezogen wird, den die der Austrittsöffnung (44, 84, 134) nachgeschaltete Kraftstoffpumpe (46, 85) erzeugt.

9. Entnahmeventil nach einem der Ansprüche 3 bis 8, dadurch gekennzeichnet, daß das zylindrische Ventilgehäuse (40, 80) in seinem Mantelbereich wenigstens einen mit einer Druckquelle verbindbaren Eintrittskanal (52, 54, 86) enthält, der in einen Zylinderraum mündet, dessen eine Seite durch einen verschiebbaren, mit dem Ventilkörper (88) verbundenen Kolben (66, 96) begrenzt wird.

10. Entnahmeventil nach Anspruch 9, dadurch gekennzeichnet, daß der mit der Druckquelle verbindbare Eintrittskanal (52, 54, 86) so angeordnet ist, daß er bei einer axialen Bewegung des Ventilkörpers (88) durch die Mantelfläche des Kolbens (66, 96) verschließbar ist.

11. Entnahmeventil nach Anspruch 10, dadurch gekennzeichnet, daß in jeden der beiden Endbereiche des Ventilgehäuses (40) ein mit der Druckquelle verbindbarer Eintrittskanal (52, 54) mündet und daß die Austrittsöffnung (44) zwischen diesen Eintrittskanälen (52, 54) abzweigt und durch Ventilmittel von diesen Eintrittskanälen (52, 54) trennbar ist.

12. Entnahmeventil nach einem der Ansprüche 9 bis 11, dadurch gekennzeichnet, daß radial zwischen dem zylindrischen Ventilgehäuse (80) und dem Kolben (96) ein im Käfig (114) axial verschiebbarer Schieber (98) angeordnet ist, der radiale Öffnungen (106) enthält, die bei einer Verschiebung des Schiebers (98) wenigstens einen Durchgang zwischen dem mit der Druckquelle verbindbaren Eintrittskanal (86) und dem Zylinderraum (104) öffnen oder schließen.

13. Entnahmeventil nach Anspruch 12, dadurch gekennzeichnet, daß in den Endbereichen des Ventilgehäuses (80) je eine mit der Kraftstoffpumpe (85) verbindbare Austrittsöffnung (84) abzweigt und in dem mittleren Bereich des Ventilmantels zwei mit einer Druckquelle verbindbare Eintrittskanäle (86) münden, die innerhalb des Ventilgehäuses (80) durch wenigstens eine Trennwand (102) gegeneinander abgedichtet sind.

14. Entnahmeventil nach einem der Ansprüche 1 bis 13, dadurch gekennzeichnet, daß der mittlere Bereich des Ventilkörpers als Käfig (20, 56) ausgebildet ist und durch Verstrebungen (24, 62) miteinander verbundene Anschlagflächen (22, 60) aufweist, zwischen denen der Körper (36, 78) angeordnet ist.

15. Entnahmeventil nach Anspruch 14, dadurch gekennzeichnet, daß zwei die Anschlagsflächen (22, 60) miteinander verbindende Verbindungstreben im oberen Bereich eines Ventilgehäuses (10, 40) verlaufen und sich auf nach innen weisenden Gehäusevorsprüngen (38) abstützen.

16. Entnahmeventil nach einem der Ansprüche 1 bis 13, dadurch gekennzeichnet, daß der Ventilkörper (88) durch einen außerhalb des Ventilgehäuses (80) angeordneten Käfig (114) axial verschiebbar ist.

17. Entnahmeventil nach Anspruch 16, dadurch gekennzeichnet, daß der Käfig (114) in einem außerhalb und quer zu der Bewegungsbahn des Körpers (118) liegenden, mit dem Ventilgehäuse (80) verbundenen Schwenklager (124) gelagert ist und daß ein mit dem Käfig (114) starr verbundenes Auslöseelement in das Ventilgehäuse (80) zur Beeinflussung der Absperrmittel eingreift.

18. Kraftstofftank mit einem Entnahmeventil gemäß einem der Ansprüche 1 bis 17.

19. Kraftstofftank nach Anspruch 18, dadurch gekennzeichnet, daß die jeweils in eine Richtung weisende Eintrittsöffnung (12, 42, 82) mit einer im Bereich der hierzu gegenüberliegenden Seite des Kraftstofftanks liegenden Ansaugstelle verbunden ist.

FIG.1

FIG.2

FIG. 3

EP 0 463 567 A2

EP 0 463 567 A2

FIG. 4

FIG.5

FIG. 6

FIG. 7

PUMPE

$P_0$  $P_1$  $P_1$  $P_0$

$P_0$

$P_1$

EP 0 463 567 A2

FIG.8

FIG.9